# EUROPÄISCHE PATENTSCHRIFT

(11) **EP 2 262 875 B1**
(45) Veröffentlichungstag und Bekanntmachung des Hinweises auf die Patenterteilung: **15.01.2014**
(21) Anmeldenummer: 09718359.4
(22) Anmeldetag: 27.02.2009
(51) Int. Cl.: B01D 53/14, B01D 5/00, C10J 3/86, C10J 3/52, B01D 53/34, C10J 3/48, C10J 3/84, C10K 1/12, C10K 1/10, B01D 53/78

(54) **VERFAHREN UND VORRICHTUNG ZUR BEHANDLUNG VON BEI DER VERGASUNG ANFALLENDEN FLUIDSTRÖMEN**
METHOD AND DEVICE FOR TREATING FLUID STREAMS PRODUCED DURING COMBUSTION
PROCÉDÉ ET DISPOSITIF DE TRAITEMENT DE FLUX DE FLUIDES APPARAISSANT LORS DE LA GAZÉIFICATION

(30) Priorität: 06.03.2008 DE 102008012965
(43) Veröffentlichungstag der Anmeldung: 22.12.2010
(73) Patentinhaber: ThyssenKrupp Uhde GmbH, 44141 Dortmund (DE)
(72) Erfinder: KOWOLL, Johannes, 44799 Bochum (DE)
(74) Vertreter: Meinke, Jochen
(86) Internationale Anmeldenummer: PCT/EP2009/001397
(87) Internationale Veröffentlichungsnummer: WO 2009/109330

(56) Entgegenhaltungen:
- EP-A2- 0 648 828
- DE-A1- 2 735 090
- US-A- 2 987 386
- US-A- 4 704 137
- US-A- 4 854 942

## Beschreibung

Die Erfindung richtet sich auf ein Verfahren zur Behandlung von bei der Vergasung von kohlenstoff- und aschehaltigen Brennstoffen anfallenden Fluidströmen, der im Oberbegriff des Anspruches 1 angegebenen Gattung sowie auf eine Vorrichtung zur Durchführung des Verfahrens.

Die Herstellung von einem wasserstoff- und kohlenmonoxidhaltigen Rohgas aus kohlenstoffhaltigen Brennstoffen erfolgt in der Regel durch Vergasung mit einem sauerstoffhaltigen Gas bei erhöhter Temperatur. Der Brennstoff wird in einem hierzu geeigneten Reaktor mit dem Gas umgesetzt, wobei man außer dem Rohgas ein festes oder verflüssigtes Nebenprodukt erhält, das in der Regel aus Flugasche und verflüssigter Schlacke und unvergastem Brennstoff besteht. Das Rohgas enthält neben den Hauptkomponenten Kohlenmonoxid und Wasserstoff weitere Gase und Dämpfe, wie Kohlendioxid, Wasserdampf, Schwefel-, Stickstoff- und Chlorverbindungen, die meistens aus dem Gas entfernt werden müssen.

Die Entstaubung und Reinigung des Rohgases erfolgt in der Regel bei deutlich niedrigeren Temperaturen als die Vergasung. Das Rohgas wird daher zuerst durch indirekten Wärmeaustausch oder durch Vermischen mit einem kälteren Medium gekühlt. Häufig wird das Rohgas mit Wasser vermischt, das vollständig oder zum Teil verdunstet, wodurch der Wassergehalt des Gases erhöht wird. Wird mehr Wasser ins Rohgas eingespeist als es verdunstet, wird das nicht verdunstete Wasser zusammen mit den im Rohgas befindlichen Feststoffen zum Teil ausgeschieden und separat aus dem Mischbereich als Suspension ausgeführt. Die Feststoffsuspension enthält noch gelöste Gase und wasserlösliche Substanzen, die bei dem Vergasungsprozess, z.B. HCl, NH₃, oder der Neutralisation der Säuren mit einer Lauge, z.B. NaCl, entstehen.

Das gekühlte Rohgas enthält noch eine kleinere Menge an Stäuben, die in der Regel für die nachfolgenden Verwendungen aus dem Prozess entfernt werden müssen. Dies kann durch Wasch- und Filtrationsprozesse geschehen. Danach wird das Rohgas häufig einer Sauergaswäsche unterzogen, bei der die sauren Gase aus dem System entfernt werden. Wird das Rohgas zur Herstellung von Wasserstoff oder einem wasserstoffreichen Gas benötigt, wird in der Regel eine Konvertierung des Kohlenmonoxids zu Kohlendioxid mit nachfolgender Abtrennung des Kohlendioxids durchgeführt.

Die aus dem unverdunsteten Wasser und den aus dem Rohgas ausgewaschenen Feststoffen gebildete und im Mischgefäß abgeschiedene Suspension muss beim Erreichen einer bestimmten Feststoffkonzentration, z.B. 5% Gewichtsanteil, aus dem Mischgefäß abgeleitet werden, um Sedimentation der Feststoffe zu vermeiden.

Aus der abgeleiteten Suspension sollen Feststoffe ausgeschieden werden. Die Suspension ist jedoch heiß, z.B. 200°C, und befindet sich unter hohem Druck, z.B. 3 MPa. Eine Entfernung der Feststoffe unter solchen Bedingungen wäre sehr schwierig, deshalb wird die Suspension in der Regel zuerst entspannt und gekühlt und erst dann werden Feststoffe abgeschieden. Zur Abtrennung der suspendierten Feinteile wird das Wasser meist in Klär- oder Absetzbecken geleitet, wobei eine niedrige Temperatur, z.B. 50°C, für eine effiziente und kostengünstige Abscheidung vorteilhaft ist.

Bei der Abkühlung der Suspension geht ein überwiegender Teil der Wärme- und Druckenergie nutzlos verloren. Das durch die Abscheidung gewonnene feststoffarme Wasser wird üblicherweise in das Mischgefäß zum Vermischen mit Rohgas zurückgeführt. Es ist vorteilhaft, das zurückgeführte Wasser vor Einspeisung in das Mischgefäß wieder aufzuwärmen und dabei die Wärme aus der Abkühlung der Suspension zu verwenden. Die Aufwärmung des Wassers in einem Wärmetauscher führt jedoch zu einer intensiven Bildung von Ablagerungen auf den wärmetauschenden Flächen, weil die Suspension und das zurückgeführte Wasser zahlreiche aus dem Rohgas und der Flugasche ausgewaschene Substanzen enthalten.

Der EP 0 648 828 B (=DE 694 05 841-T2) ist eine gattungsmäßige verfahrensweise zu entnehmen, wobei dort das Synthesegas bzw. Rohgas einem Waschbehälter zugeführt wird, um dann weitere Behandlungsschritte zu durchlaufen, während die Suspension einer Flash-Trommel zugeführt wird. Der US 4 074 981 oder der US 5 345 756 sind Verfahren und Anlagen zur Vergasung von kohlenstoffhaltigen Brennstoffen zu entnehmen, allerdings wenig Hinweise enthalten, wie die jeweils entstehende Suspension aus dem Mischgefäß weiter zu behandeln ist.

Aus der DE 41 09 231 C ist ein Verfahren zur Verwertung von halogenbelasteter kohlenstoffhaltiger Feststoffe bekannt, die in fließfähigem Zustand in einen Reaktor befördert werden. Das erzeugte Gas wird mit alkalischem Wasser gequencht, um das Gas abzukühlen und Ruß und Alkalien auszuwaschen. Ein Verfahren und eine Vorrichtung zum Behandeln von Abwasser einer Synthesegas-Waschvorrichtung mittels Vakuum-Flash und zur Gewinnung von Dampf ist aus der DE 698 31 867 T bekannt. Eine Entspannung und Wärmerückgewinnung ist bei diesem Verfahren wegen niedriger Temperaturen kaum möglich, wobei auch das zum Quench zurückgeführte Kondensat nicht vorgewärmt wird.

Aufgabe der Erfindung ist es, ein Verfahren und eine Vorrichtung anzugeben, mit der die im System befindlichen wärmeinhalte optimal genutzt werden können ebenso wie die zum Kühlen und Kondensieren benötigten Wassermengen, wobei letztere rezirkuliert werden sollen.

Mit einem Verfahren der eingangs bezeichneten Art wird diese Aufgabe gemäß der Erfindung dadurch gelöst, dass die Suspension aus einer Entspannungsstufe der nachfolgenden Entspannungsstufe zugeführt wird, wobei das Kondensat der weiteren Entspannungsstufe in die vorangegangene Entspannungsstufe zurückgeführt wird, wobei erfindungsgemäß der Einsatz mehrerer Entspannungsstufen vorgesehen ist, so dass die Suspension aus einer Entspannungsstufe der nachfolgenden Entspannungsstufe zugeführt wird, wobei das Kondensat der weiteren Entspannungsstufe in die vorangegangene Entspannungsstufe zurückgeführt wird.

Durch die erfindungsgemäße Behandlung der Suspension aus Staub und Ruß aus der Vergasung und Wasser aus beispielsweise einem Wasserquench kann die erfindungsgemäße Verfahrensweise für die Vergasung von getrockneter Kohle, Kohlenmaische, flüssigen Brennstoffen, z.B. Raffinerie-Rückständen u. dgl. eingesetzt werden.

Durch den direkten Kontakt mit Wasser kann sich der bei der Entspannung bildende Dampf direkt abgekühlt und kondensiert werden, so dass dieses Kondensat jeweils weiter eingesetzt werden kann.

Zweckmäßig wird in der letzten Entspannungsstufe ein Vakuum erzeugt (0,02 MPa), was z.B. dadurch erreichbar ist, dass kaltes Frischwasser zugeführt wird. Dabei kann in weiterer Ausgestaltung der Erfindung auch vorgesehen sein, dass die im jeweiligen Dom der Entspannungsstufe sich bildenden Abgase abgesaugt und einer weiteren Behandlung zugeführt werden.

In einer weiteren Ausgestaltung der erfindungsgemäßen Verfahrensweise ist vorgesehen, dass die Suspension aus der letzten Entspannungsstufe einem Absetzbecken od. dgl. zur Trennung von Feststoff und Abwasser zugeführt wird, wobei das entstehende Abwasser in eine Entspannungsstufe zurückgeführt wird.

Ein besonderer Vorteil der Erfindung besteht u.a. darin, dass ein Teilstrom der Suspension zur Bildung eines Wasserfilmes in einer Übergangsengstelle zwischen Reaktionsraum und Mischgefäß zurückgeführt wird, wobei durch diese Rückführung wenigstens eines Teiles der Suspension in den Reaktionsraum sich eine optimale Regelungsmöglichkeit der umgewälzten Massenströme ergibt.

In weiterer Ausgestaltung ist eine Ansäuerung der Suspension und/oder des zu erwärmenden Wassers vor oder in den Entspannungsstufen vorgesehen, was z.B. mit Salz- oder Essigsäure geschehen kann. CO₂ entweicht bei der Entspannung der Suspension aufgrund der Verringerung des Druckes und bei Erwärmung rückgeführten Wassers aufgrund der Verringerung der Löslichkeit der Gase. Durch die CO₂-Entweichung wird die Suspension basisch, wodurch z.B. Ca- und Mg-Ablagerungen gebildet werden. Um dies zu verhindern, wird erfindungsgemäß Säure hinzudosiert, um einen pH-Wert < 7, z.B. 5 bis 6, einzustellen, um derartige Ablagerungsbildner lösen zu können.

Wegen der Dosierung der Säure in mindestens einer Entspannungsstufe ist kein stark saures Schlackebad, wie z.B. in der DE 41 09 231 C2 mit pH 4,4, erforderlich. Bevorzugt wird ein pH-Wert des Schlackebades von 5 bis 6, um preiswertere Konstruktionsmaterialien einsetzen zu dürfen.

Sehr kritisch ist die Erwärmung eines kalziumhaltigen Wassers. Das in den Quench geleitete, zu erwärmende Wasser besteht überwiegend aus dem zurückgeführten Wasser, das durch Filtration der Suspension entsteht. Da Kalzium üblicherweise ein Hauptbestandteil der suspendierten Asche ist, ist das Wasser mit Kalzium in Form von Kalziumhydrogenkarbonat gesättigt. Mit steigender Wassertemperatur sinkt die CO₂-Löslichkeit ab, wodurch das wasserlösliche Kalziumhydrogenkarbonat Ca(HCO₃)₂ in das kaum lösliche Kalziumkarbonat CaCO₃ umgewandelt wird, das als Ablagerung ausgeschieden wird. Die Folgen dieses Phänomens können in Wasserkochern beobachtet werden.

Bei der erfindungsgemäßen Entspannung mit Direktkontakt der Entspannungsbrüden mit dem zu erwärmenden Wasser wird ein Teil der aus der entspannten Suspension entweichenden sauren Gase, wie CO₂ und H₂S, durch das zu erwärmende Wasser absorbiert, wodurch das Gleichgewicht in die Richtung des Kalziumhydrogenkarbonats verschoben wird. Bei einer Druckvergasung unter mindestens 1 MPa und einem CO₂-Gehalt im gequenchten feuchten Gas von 1.% oder mehr kann dadurch die Ausscheidung von Ablagerungen aus dem erwärmten Wasser verhindert werden.

Um eine Abscheidung dieser Ablagerungsbildner später zu fördern, kann erfindungsgemäß vor dem Absetzbecken oder der Filtration der pH-Wert wieder angehoben werden, beispielsweise durch Dosieren von Basen.

Zur Beschleunigung der Agglomeration im Absetzbecken sind bei Suspensionstemperatur von ca. 60°C Zusätze erforderlich. Um so niedrige Temperatur durch Verdampfung zu erreichen, wird in der letzten Entspannungsstufe ein Unterdruck von 0,02 MPa angestrebt. Das kühlende Medium muss in dieser Stufe kälter sein, was z.B. durch Abkühlung des zurückgeführten Filtrats durch Beimischen von kaltem Wasser oder durch Kühlung mit Frischwasser erreichbar ist.

Beispiel für überschlägige Auslegung einer Entspannungsstufe :

### Suspension

Eintritt 3 Gew.%Asche, 100 kg/s, 220°C, 40 bar
Dampfdruck in der Stufe 14 bar - Siedetemperatur 195°C
   Verdampfungsenthalpie 1958 kJ/kg
   Die Abkühlung 220-195=25K Q=100*4.2*25 = 10500 kW
   verursacht Verdampfung von 10500/1958 = 5.4 kg/s H₂O
   Dampfdichte 7.1 kg/m³ → Dampfvolumen 0.76 m³/s
Kühlung mit Filtrat, 100 kg/s
   Resultierende Erwärmung durch Dampfkondensation um 24K
Schüttung durchströmt aufwärts
   Kondensatdichte 870 kg/m³ → Kondensatvolumen 0.12m³/s
   Leerrohrgeschwindigkeit des Kondensats in der Schüttung 0.04 m/s
   Erforderlicher Querschnitt 3m²→ D=2m
   Höhe der Schüttung 1m
   Spec. Oberfläche der Schüttung 500 m²/m
   Gesamtoberfläche der Schüttung 3*1*500 = 1500 m²
   Wärmeeingangskoeffizient 1 kW/m²/K
   Resultierende mittlere Temperaturdifferenz 10500/1500/1=7K

Die obige Abschätzung zeigt, dass geringe Temperaturdifferenzen zwischen dem Dampf aus Suspensionsentspannung und dem zu erwärmenden Filtrat trotz relativ kleiner Dimensionen einer Entspannungsstufe erreichbar sind.

Eine Kaskade von Entspannungsstufen ist relegungstechnisch einfach beherrschbar, da der Suspensionsfluss durch Niveauregler beeinflusst wird, dagegen die Dampfdrücke in den Behälter der Kaskade sich selbstständig einstellen, abhängig von Mengen und Temperaturen der Suspension und des zu erwärmenden Mediums, z.B. Filtrats.

Die Erfindung sieht auch eine Behandlung des dem Mischgefäß entnommenen, mit wasserdampf angereicherten Rohgases vor, das z.B. einem Venturiwäscher zugeführt wird und/oder einem Tropfenabscheider und/oder, je nach Wunsch, einem mehrstufigen Wäscher und/oder Konvertierungseinrichtungen für enthaltendes Kohlenmonoxid und/oder einer Absorptionseinrichtung für Sauerstoff zur Bildung des Reingases.

Durch die Variation der Einspeisung von zusätzlichem Frischwasser lassen sich beispielsweise lösliche Stoffe, wie HCl, HF od. dgl. auswaschen.

Folgende erfindungsgemäße Bedingungen können vorliegen:
- Druck mindestens 1 MPa, CO₂-Gehalt im gequenchten feuchten Gas mindestens 1 % vol.;
- ein Teil der bei der Entspannung entweichenden Gase, bzw. CO₂, wird durch das erwärmte Wasser absorbiert;
- Trennung des Feststoffes aus der Suspension, ein Teil des gewonnenen feststoffarmen Wassers wird zuerst erwärmt mit Ausnutzung der fühlbaren Wärme der Suspension bzw. der Kondensationswärme aus dem Entspannungsdampf und dann als Quenchwasser verwendet;
- mindetens zweistufige Entspannung.

Zur Lösung der weiter oben definierten Aufgabe sieht die Erfindung auch eine entsprechende Anlage mit den entsprechenden Anlageteilen vor, die sich dadurch auszeichnet, dass eine Mehrzahl von Berieselungstürmen oder vergleichsweisen Entspannungsvorrichtungen in Hintereinanderschaltung vorgesehen sind mit Verbindungsleitungen der jeweiligen Sümpfe für die Suspension und Kondensatrückführleitungen vom nachgeschalteten Berieselungsturm in den vorangehenden Berieselungsturm und/oder in das Mischgefäß.
wobei sich weitere Ausgestaltungen der Vorrichtung aus den weiteren Unteransprüchen ergeben.

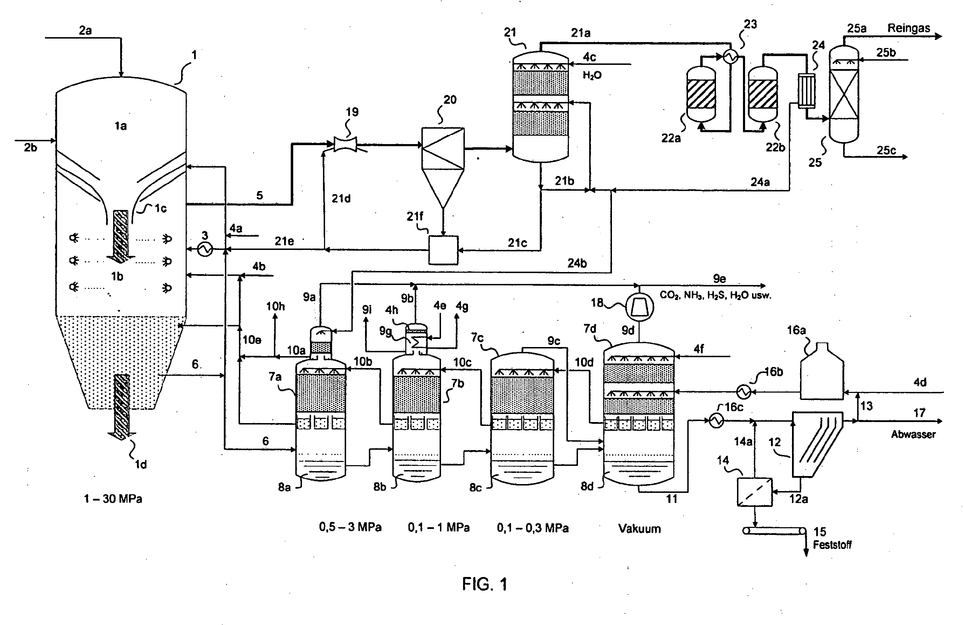

Die Erfindung ist nachstehend anhand der Zeichnung beispielsweise näher erläutert. Diese zeigt in der einzigen Figur eine Prinzipdarstellung der erfindungsgemäßen Anlage zur Durchführung des erfindungsgemäßen Verfahrens.

Die in der Figur teilweise vereinfacht wiedergegebene Anlage weist einen Vergasungsreaktor 1 auf, der einen Reaktionsraum 1a aufweist, in den ein kohlenstoffhaltiger Brennstoff 2a und ein sauerstoffhaltiges Gas 2b. eingespeist werden. Ein derartiges Gas kann auch Kohlendioxid und Wasserdampf enthalten.

In dem mit 1a bezeichneten Reaktionsraum findet die Kohlevergasung statt. Das so erhaltene Rohgas strömt in ein den Reaktionsraum 1a nachgeschaltetes Mischgefäß 1b, in dem es mit zirkulierender Suspension, Prozesskondensat und/oder Ergänzungswasser, die zugehörigen Zuleitungen sind mit 4a-4b, 10b und 21e bezeichnet, vermischt und gekühlt wird.

Das Rohgas wird zuerst durch eine Engstelle geleitet, in der ein frei fallender Wasserfilm, mit 1c bezeichnet, den Übergang von Reaktionsraum 1a in das Mischgefäß 1b darstellt. Die sich im Sumpf des Mischgefäßes sammelnde Schlacke wird bei 1d in Schwerkraftrichtung unten ausgeführt.

In der Mischzone verdunstet ein Teil des Wassers, wodurch das ausströmende gekühlte Rohgas 5 einen hohen Wasserdampfanteil aufweist. Da in das Mischgefäß mehr Wasser eingespeist als für die Verdunstung erforderlich ist, trifft im Mischgefäß ein Teil des unvergasten Brennstoffes und der Flugasche als Suspension auf, die über die Leitung 6 ausgeschieden wird. Dabei kann ein Teil dieser Suspension, wie oben schon kurz angedeutet, zur Bildung des frei fallenden Wasserfilmes 1c rezirkuliert werden, ggf. durch Hinzufügen von Zusatzwasser (Pfeil 4a)..

Zur weiteren Behandlung wird diese Suspension über die Leitung 6 weiteren Aggregaten zur Kühlung und Entspannung zugeführt, um die Feststoffe aus der Suspension im drucklosen Zustand kostengünstig trennen zu können. Dafür sind in der Figur Berieselungstürme 7a-7d dargestellt, in denen ein Teil des Wassers verdampft, nach oben aufsteigt und über die Berieselung kondensiert wird. Diese Berieselungselemente der Berieselungstürme sind mit 7a-7d bezeichnet. Der jeweils noch mit Wasser vermischte Teil der Suspension aus dem Sumpf eines Berieselungsturmes wird in den nächsten Berieselungsturm eingespeist, wobei das sich durch die Behandlung anwärmende Berieselungswasser wenigstens teilweise im Mischgefäß 1b eingesetzt werden kann. Dies ist mit den Pfeilen 10a bzw. 10e bezeichnet.

Wie sich aus der Schaltung ergibt, erhält der erste Berieselungsturm Kühlwasser aus dem nachfolgenden Berieselungsturm (Leitung 10b), während der zweite Berieselungsturm aus dem dritten Berieselungsturm sein Kühlwasser erhält, was mit der Leitung 10c wiedergegeben ist, so dass sich eine in der Figur vierfache Kaskadenschaltung ergibt, wobei letztendlich der letzte Berieselungsturm vergleichsweise kaltes Wasser aus dem Abwasser eines Klärbeckens 12 erhält, welches über eine Leitung 13 einem Wassertank 16a zugeführt wurde, wobei in der Rückführleitung einerseits und in der Beaufschlagungsleitung 11 der Suspension zum Klärbecken 12 jeweils Kühler als Wärmetauscher 16b bzw. 16c vorgesehen sein können.

Durch die Entspannung wird mit dem Dampf auch ein Teil der in der Suspension gelösten Gase freigesetzt. Um eine Anreicherung der Gase in den Entspannungsraum zu vermeiden, werden kleinere Gasmengen über den Kopf der Türme ausgeführt, was mit 9a bis 9d bezeichnet ist.

Um die Menge des zu entsorgenden Gases gering zu halten, ist es sinnvoll, den Wasserdampf weitgehend auszukondensieren. Dafür sind über dem Berieselungsturm 7a ein mit kälterem Wasser 24b berieselter Bereich 9f und über dem Berieselungsturm 7b ein Kühler 9g vorgesehen. Das aus dieser zweiten Kühlstufe gewonnene erwärmte Berieselungswasser oder Kondensat 9i kann entweder zum Vermischen mit Rohgas oder für andere Zwecke benutzt werden. Ein Tropfenabscheider 9h verringert die Menge des mitgerissenen flüssigen Wassers. Die verdickte Suspension 11 aus dem letzten Entspannungsschritt wird schließlich in ein Absetz- und Klärbecken 12 geleitet. Aus dem Klärbecken wird das feststoffarme Wasser 13 in die Berieselungstürme 7a-7d zurückgeführt. Dabei kann optional eine Einrichtung zum Kühlen 16b, wie oben schon angegeben, verwendet werden. Gegebenenfalls kann auch Kühlwasser von außen zugeführt und entweder separat 4f oder vermischt mit dem geklärten Wasser 4d eingesetzt werden.

vorzugsweise wird die feststoffreiche Fraktion aus dem Absetzbecken mit einer Bandfilterpresse 14 filtriert. Der ausgeschiedene Feststoff 15 verlässt die Anlage, dagegen wird das feststoffarme Wasser in das Absetzbecken zurückgeführt. Nicht dargestellt sind zusätzliche Tanks für die eingedickte Suspension 12a und für das feststoffarme Filtrat 14a, die periodisches Abschalten des Filters 14 erlauben. Hierzu kann optional ein Tank 16a verwendet werden. Ein Teil des feststoffarmen Wassers wird aus dem Prozess als Abwasser 17 ausgeschleust, um eine Anreicherung der Salze im Wasser zu begrenzen.

Für die Feststoffabtrennung aus der Suspension sind niedrige Temperaturen, z.B. <60°C, vorteilhaft. Um solche Temperatur in der letzten Entspannungsstufe zu erreichen, ist neben dem kalten Berieselungswasser 4f auch eine Absaugvorrichtung erforderlich. Das kann entweder eine mechanische Vakuumpumpe oder eine Strahlvorrichtung sein.

Das aus der Kohlevergasung erhaltene Rohgas 5 wird zunächst in einem Venturiwäscher 19 mit Prozesskondensat oder Waschwasser 21d vermischt. Anschließend wird es in einem Tropfenabscheider oder Zyklon 20 von den mitgeführten Feinteilen und Flüssigkeitstropfen befreit. Danach wird es in einem Waschturm 21 von den festen Feinteilen und wasserlöslichen Verunreinigungen befreit. Das Waschwasser aus dem Waschturm kann in den Kühlungsprozess des Rohgases zurückgeführt werden (Pfeil 21e) oder in einem Tank 21f gesammelt und gelagert werden. Auch hier kann Ergänzungswasser zugeführt werden.

Danach gelangt das Rohgas hintereinander in zwei Vorrichtungen 22a,22b zur CO-Konvertierung. Vorteilhaft kann hinter den ersten Konverter ein Wärmetauscher 23 geschaltet werden. Zur Abtrennung des Kohlendioxids sowie der übrigen Sauergase wird das Gas dann noch durch einen Absorptionsturm 25 geleitet. Man erhält gereinigtes Synthesegas, Brenngas oder Wasserstoff 25a und die mitgeführten Sauergase 25b. Hinter dem zweiten Konverter befindet sich eine Vorrichtung 24 zum Kühlen und Abscheiden des Kondensats. Das gewonnene Kondensat 24a kann in den Waschturm 21 zurückgeführt oder teilweise entspannt und gestrippt werden, um die gelöste Gase auszutreiben. Eine kostengünstige Alternative für Entgasung der Kondensate bieten die Berieselungstürme, indem das Kondensat 24b für Berieselung 9f verwendet wird.

Natürlich ist die Erfindung nicht auf das vorstehende Ausführungsbeispiel beschränkt, sondern kann in vielfacher Hinsicht abgewandelt werden, ohne den Grundgedanken zu verlassen.

## Patentansprüche

1. Verfahren zur Behandlung von bei der Vergasung von kohlenstoff- und aschehaltigen Brennstoffen anfallenden Fluidströtnen, wobei bei der Vergasung Brennstoff in einem Reaktor mit einem sauerstoffhaltigen Gas zu einem Rohgas umgesetzt wird, das durch die Vergasung entstehende Rohgas in einem nachfolgenden Mischgefäß mit Wasser gemischt und gekühlt wird, der verdunstende Anteil des Wassers mit dem Rohgas aus dem Mischgefäß abgeführt und das verbleibende Feststoff-/wassergemisch (Suspension) wenigstens teilweise abgeleitet wird, wobei die aus dem Mischgefäß abgeleitete Suspension in wenigstens einer nachfolgenden Stufe bei Verdampfung wenigstens eines Teiles des Wassers und Absinken der Temperatur entspannt wird und der entstehende Dampf durch direktem Kontakt mit Wasser gekühlt und wenigstens teilweise auskondensiert wird,
**dadurch gekennzeichnet,**
**dass** die Suspension aus einer Entspannungsstufe der nachfolgenden Entspannungsstufe zugeführt wird, wobei das Kondensat der weiteren Entspannungsstufe in die vorangegangene Entspannungsstufe zurückgeführt wird.

2. Verfahren nach Anspruch 1,
**dadurch gekennzeichnet,**
**dass** zur Erzeugung eines Vakuums in der letzten Entspannungsstufe kaltes Frischwasser zugeführt wird.

3. Verfahren nach Anspruch 1 oder 2,
**dadurch gekennzeichnet,**
**dass** die im jeweiligen Dom der Entspannungsstufe sich bildenden Abgase abgesaugt und einer weiteren Behandlung zugeführt werden.

4. Verfahren nach einem der vorangehenden Ansprüche,
**dadurch gekennzeichnet,**
**dass** die Suspension aus der letzten Entspahnungsstufe einem Absetzbecken od. dgl. zur Trennung von Feststoff und Abwasser zugeführt wird, wobei das entstehende Abwasser in eine Entspannungsstufe zurückgeführt wird.

5. Verfahren nach einem der vorangehenden Ansprüche,
**dadurch gekennzeichnet,**
**dass** ein Teilstrom der Suspension zur Bildung eines Wasserfilmes in einer Übergangsengstelle zwischen Reaktionsraum und Mischgefäß zurückgeführt wird.

6. Verfahren nach einem der vorangehenden Ansprüche,
**dadurch gekennzeichnet,**
**dass** die Suspension und/oder das zu erwärmende Wasser vor oder in den Entspannungsstufen beispielsweise mit Salz- oder Essigsäure angesäuert wird.

7. Verfahren nach einem der vorangehenden Ansprüche,
**dadurch gekennzeichnet,**
**dass** vor dem Einleiten in das Absetzbecken und/oder vor der Filtration durch Eindosieren von Basen der pH-Wert beispielsweise zwischen 7-9 eingestellt wird.

8. Verfahren nach einem der vorangehenden Ansprüche,
**dadurch gekennzeichnet,**
**dass** das Rohgas aus dem Mischgefäß einem Venturiwäscher und/oder Tropfenabscheider und/oder Waschturm und/oder Konvertierungseinrichtungen für enthaltendes Kohlenmonoxid und/oder einer Absorptionseinrichtung für Sauerstoff zur Bildung des Reingases zugeführt wird.

9. Vorrichtung zur Durchführung des Verfahrens nach einem der vorangehenden Ansprüche mit einem Vergasungsreaktor (1) mit einem Mischgefäß (1b) zur Mischung des bei der vergasung entstehenden Rohgases mit Wasser, wobei eine Leitung (6) zwischen dem unteren Bereich des,Mischgefäßes (1b) zu einem ersten, als Berieselungsturm (7a) ausgebildeten Entspannungsgefäß vorgesehen ist, wobei der Berieselungsturm mit einem Kondensatauffangboden (8a) und einer Rückführleitung (10a) zum mit Sprühköpfen ausgerüsteten Mischgefäß (1b) für das entstehende Kondensat versehen ist,
**dadurch gekennzeichnet,**
**dass** eine Mehrzahl von Berieselungstürmen (7a-7d) oder vergleichsweisen Entspannungsvorrichtungen in Hintereinanderschaltung vorgesehen sind mit Verbindungsleitungen der jeweiligen Sümpfe (8a-8d) für die Suspension und Kondensatrückführleitungen (10a-10d) vom nachgeschalteten Berieselungsturm in den vorangehenden Berieselungsturm und/oder in das Mischgefäß.

10. Vorrichtung nach Anspruch 9,
**dadurch gekennzeichnet,**
**dass** im Übergangsbereich zwischen Reaktionsraum und Mischgefäß Einbauten zur Bildung eines Wasserfilmes (1c) vorgesehen sind.

11. Vorrichtung nach Anspruch 9 oder 10,
**dadurch gekennzeichnet,**
**dass** eine aus dem Kopfbereich des Mischgefäßes führende Rohgasleitung (5) zur Beaufschlagung eines Venturiwäschers (19) und/oder Tropfenabscheiders (20) und/oder Waschturmes (21) vorgesehen ist mit Beaufschlagungs- und Rückführleitungen für Prozesskondensat und/oder Waschwasser und/oder Frischwasser.

12. Vorrichtung nach Anspruch 9 oder einem der folgenden,
**dadurch gekennzeichnet,**
**dass** hinter dem letzten Berieselungsturm (7d) zur Beaufschlagung der Suspension ein Absetz- oder Klärbecken (12) od. dgl. mit Abwasserentnahme (17) und Feststoffentnahme (15) vorgesehen ist.

## Claims

1. Method for treating fluid streams produced during gasification of fuels containing carbon and ash, wherein during the gasification fuel is reacted with oxygen-containing gas in a reactor to form a crude gas, in a subsequent mixing vessel the crude gas produced by the gasification is mixed with water and cooled, the fraction of the water that evaporates off is drained off from the mixing vessel with the crude gas and the remaining solid/water mixture (suspension) is at least partly drawn off, while in at least one successive step the suspension drawn off from the mixing vessel is relaxed with evaporation of at least some of the water and lowering of the temperature, and the steam produced is cooled by direct contact with water and is at least partly condensed out,
**characterised in that**
the suspension is conveyed from one relaxation stage to the following relaxation stage, while the condensate from the further relaxation stage is recycled back into the previous relaxation stage.

2. Method according to claim 1, **characterised in that** in order to produce a vacuum in the final relaxation stage cold fresh water is fed in.

3. Method according to claim 1 or 2, **characterised in that** the exhaust gases formed in the respective dome of the relaxation stage are removed by aspiration and fed into a further treatment.

4. Method according to one of the preceding claims, **characterised in that** the suspension from the last relaxation stage is fed into a settling tank or the like for separating the solids and waste water, the waste water produced being recycled back into a relaxation stage.

5. Method according to one of the preceding claims, **characterised in that** a partial stream of the suspension is fed back in to form a film of water in a transitional constriction between the reaction chamber and the mixing vessel.

6. Method according to one of the preceding claims, **characterised in that** the suspension and/or the water to be heated is acidified with hydrochloric or acetic acid, for example, prior to or in the relaxation stages.

7. Method according to one of the preceding claims, **characterised in that** before introduction into the settling tank and/or before the filtration the pH is adjusted to a value of between 7 and 9, for example, by metered addition of bases.

8. Method according to one of the preceding claims, **characterised in that** the crude gas from the mixing vessel is fed to a venturi scrubber and/or droplet separator and/or scrubbing tower and/or means for converting any carbon monoxide present and/or an absorption device for oxygen in order to form the clean gas.

9. Apparatus for carrying out the method according to one of the preceding claims, with a gasification reactor (1) having a mixing vessel (1b) for mixing the crude gas formed during gasification with water, wherein a pipe (6) is provided between the lower region of the mixing vessel (1b) to a first relaxation vessel embodied as a scrubber (7a), the scrubber being provided with a condensate collecting base (8a) and a recirculating pipe (10a) leading to the mixing vessel (1b) equipped with spray heads for the condensate formed,
**characterised in that**
a plurality of scrubbers (7a - 7d) or comparable relaxation devices are provided, connected one after another, with connecting pipes for the respective sumps (8a-8d) for the suspension and condensate recirculating pipes (10a-10d) from the downstream scrubber into the previous scrubber and/or into the mixing vessel.

10. Apparatus according to claim 9, **characterised in that** built-in components for forming a water film (1 c) are provided in the transitional region between the reaction chamber and the mixing vessel.

11. Apparatus according to claim 9 or 10, **characterised in that** a crude gas pipe (5) leading out of the top region of the mixing vessel is provided for acting on a venturi scrubber (19) and/or droplet separator (20) and/or washing tower (21), with impacting and recirculating pipes for process condensate and/or washing water and/or fresh water.

12. Apparatus according to claim 9 or one of the following claims, **characterised in that** after the final scrubber (7d) for acting on the suspension a settling or clarifying tank (12) or the like is provided with a waste water outlet (17) and solids outlet (15).

## Revendications

1. Procédé de traitement de flux de fluides apparaissant lors de la gazéification de combustibles contenant du carbone et des cendres, du combustible étant transformé en un gaz brut lors de la gazéification dans un réacteur avec un gaz contenant de l'oxygène, le gaz brut produit par la gazéification étant mélangé à de l'eau et refroidi dans un récipient de mélange suivant, la part d'eau qui s'évapore étant évacuée du récipient de mélange avec le gaz brut et le mélange solide/eau (suspension) qui reste étant au moins partiellement évacué, la suspension évacuée du récipient de mélange étant détendue dans au moins un étage suivant lors de la vaporisation d'au moins une partie de l'eau et de la baisse de la température et la vapeur formée étant refroidie par contact direct avec de l'eau et au moins en partie condensée,
**caractérisé en ce que** la suspension provenant d'un étage de détente est conduite à l'étage de détente suivant, le condensat de cet autre étage de détente étant reconduit dans l'étage de détente précédent.

2. Procédé selon la revendication 1, **caractérisé en ce que**, pour produire un vide dans le dernier étage de détente, de l'eau fraîche froide est amenée.

3. Procédé selon la revendication 1 ou 2, **caractérisé en ce que** les gaz d'échappement se formant dans le dôme respectif de l'étage de détente sont aspirés et conduits à un autre traitement.

4. Procédé selon l'une des revendications précédentes, **caractérisé en ce que** la suspension provenant du dernier étage de détente est conduite à un bassin de décantation ou analogue pour séparer le solide et l'eau usée, l'eau usée produite étant renvoyée dans un étage de détente.

5. Procédé selon l'une des revendications précédentes, **caractérisé en ce qu'**un flux partiel de la suspension est reconduit pour la formation d'un film d'eau dans un point d'étranglement de transition entre l'espace de réaction et le récipient de mélange.

6. Procédé selon l'une des revendications précédentes, **caractérisé en ce que** la suspension et/ou l'eau à chauffer sont acidifiées par exemple avec de l'acide chlorhydrique ou avec de l'acide acétique avant ou dans les étages de détente.

7. Procédé selon l'une des revendications précédentes, **caractérisé en ce que** la valeur de pH est réglée par exemple entre 7 et 9 par l'ajout de bases avant l'introduction dans le bassin de décantation et/ou avant le filtrage.

8. Procédé selon l'une des revendications précédentes, **caractérisé en ce que** le gaz brut provenant du récipient de mélange est renvoyé à un laveur Venturi et/ou à un séparateur de gouttes et/ou à une tour de lavage et/ou à des dispositifs de conversion pour le monoxyde de carbone contenu et/ou à un dispositif d'absorption pour l'oxygène afin de former le gaz purifié.

9. Dispositif pour la mise en oeuvre du procédé selon l'une des revendications précédentes avec un réacteur de gazéification (1) avec un récipient de mélange (1b) pour mélanger le gaz brut produit lors de la gazéification et de l'eau, une conduite (6) étant prévue entre la zone inférieure du récipient de mélange (1b) et un premier récipient de détente conçu comme une tour de lavage par ruissellement (7a), la tour de lavage étant munie d'un fond collecteur de condensat (8a) et d'une conduite de retour (10a) vers le récipient de mélange (1b) équipé de têtes de pulvérisation pour le condensat formé,
**caractérisé en ce que** plusieurs tours de lavage par ruissellement (7a à 7d) ou dispositifs de détente comparables sont prévus dans un branchement en série avec des conduites de liaison des citernes respectives (8a à 8d) pour la suspension et avec des conduites de retour de condensat (10a à 10d) de la tour de lavage branchée en aval à la tour de lavage précédente et/ou au récipient de mélange.

10. Dispositif selon la revendication 9, **caractérisé en ce que** des aménagements pour la formation d'un film d'eau (1c) sont prévus dans la zone de transition entre l'espace de réaction et le récipient de mélange.

11. Dispositif selon la revendication 9 ou 10, **caractérisé en ce que**, pour l'alimentation d'un laveur Venturi (19) et/ou d'un séparateur de gouttes (20) et/ou d'une tour de lavage (21), une conduite de gaz brut (5) conduisant hors de la zone supérieure du récipient de mélange est prévue avec des conduites d'alimentation et de retour pour le condensat de processus et/ou pour l'eau de lavage et/ou pour l'eau fraîche.

12. Dispositif selon la revendication 9 ou l'une des revendications suivantes, **caractérisé en ce que**, en aval de la dernière tour de lavage par ruissellement (7d), un bassin de décantation ou de clarification (12) ou analogue avec prélèvement d'eaux usées (17) et prélèvement de matériaux solides (15) est prévu pour la suspension.
